(19) Europäisches Patentamt / European Patent Office / Office européen des brevets

(11) **EP 4 113 419 B1**

(12) **EUROPEAN PATENT SPECIFICATION**

(45) Date of publication and mention
of the grant of the patent:
**19.02.2025 Bulletin 2025/08**

(21) Application number: **20921742.1**

(22) Date of filing: **15.12.2020**

(51) International Patent Classification (IPC):
**G06Q 40/06** (2012.01)

(52) Cooperative Patent Classification (CPC):
**G06Q 40/06**

(86) International application number:
**PCT/JP2020/046744**

(87) International publication number:
**WO 2021/171746 (02.09.2021 Gazette 2021/35)**

(54) **PORTFOLIO CREATION ASSISTANCE DEVICE, PORTFOLIO CREATION ASSISTANCE METHOD, AND PORTFOLIO CREATION ASSISTANCE SYSTEM**

VORRICHTUNG ZUR UNTERSTÜTZUNG DER ERSTELLUNG VON PORTFOLIOS, VERFAHREN ZUR UNTERSTÜTZUNG DER ERSTELLUNG VON PORTFOLIOS UND SYSTEM ZUR UNTERSTÜTZUNG DER ERSTELLUNG VON PORTFOLIOS

DISPOSITIF D'AIDE À LA CRÉATION DE PORTEFEUILLE, PROCÉDÉ D'AIDE À LA CRÉATION DE PORTEFEUILLE ET SYSTÈME D'AIDE À LA CRÉATION DE PORTEFEUILLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2020 JP 2020033557**

(43) Date of publication of application:
**04.01.2023 Bulletin 2023/01**

(73) Proprietor: **Hitachi, Ltd.**
**Tokyo 100-8280 (JP)**

(72) Inventor: **TERASAKI, Kohei**
**Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**

(56) References cited:
**WO-A1-2016/183357      JP-A- 2001 522 100**
**JP-A- 2008 047 099**

• **YAMAOKA MASANAO ET AL: "CMOS Annealing Machine: an In-memory Computing Accelerator to Process Combinatorial Optimization Problems", 2019 IEEE CUSTOM INTEGRATED CIRCUITS CONFERENCE (CICC), IEEE, 14 April 2019 (2019-04-14), pages 1 - 8, XP033586942, DOI: 10.1109/CICC.2019.8780296**
• **TANAKA SHU, TANAHASHI KOTARO, MOTOHASHI TOMOMITSU, TAKAYANAGI SHINICHI: "Basic and current state of application cases for quantum annealing", TEION KOGAKU - CRYOGENIC ENGINEERING, vol. 25, no. 5, 20 September 2018 (2018-09-20), JP, pages 287 - 294, XP009530703, ISSN: 0389-2441, DOI: 10.2221/ jcsj.53.287**
• **ANONYMOUS: "Launch of demonstration experiment on non-life insurance portfolio optimization using new semiconductor-based computer", HITACHI NEWS, JP, pages 1 - 3, XP009530789, Retrieved from the Internet <URL:https://www.hitachi.co.jp/New/cnews/month/2020/01/0108.pdf>**

## Description

[Technical Field]

The present invention relates to a portfolio creation assistance device, a portfolio creation assistance method, and a portfolio creation assistance system.

[Background Art]

There are cases where various financial institutions such as insurance companies distribute risks attributable to handling instruments by trading multiple instruments relating to the handling instruments with other companies and forming appropriate portfolios. Note that aforementioned instruments are speculative instruments for which risks and returns are expected at certain probabilities, and an insurance instrument is an example.

As conventional techniques used to form such a portfolio, techniques such as a portfolio optimization method (see Patent Literature 1) as follows are proposed. For example, for an efficient frontier calculated on a plane of a risk axis and a return axis, a lower limit straight line is calculated from a lower limit return and a lower limit achievement probability, a portion in the efficient frontier where the achievement probability is equal to or higher than the lower limit achievement probability is set as an effective line portion, a straight line that couples a point of target return set on the return axis and a point on the effective line portion and that has the greatest tilt is calculated as a target straight line, and a common point between the target straight line and the effective line portion is set as the optimal portfolio.

Moreover, there are proposed methods such as a method for optimizing a portfolio with multiple financial instruments (see Patent Literature 2). This method includes a) step of selecting constraints and optimality criteria for a portfolio, b) step of obtaining historical information on financial risk factors, c) step of selecting a model appropriate for simulating the risk factors of the portfolio by way of elliptical distribution, based on the historical information, d) step of considering both estimation risk and market risk by simulation, e) step of selecting numerical accuracy criteria for an optimal portfolio composite, f) step of simulating the risk factors by drawing a plurality of parameters and paths given a model and an observation (containing a missing value in some cases); g) step of finding optimal portfolio weights given the selected constraints and optimality criteria, based on the parameters and paths simulated; and h) step of executing the simulation and finding of the optimal portfolio weights until the accuracy criteria are fulfilled.

A flexible, interactive approach to investment portfolio optimization delivering a portfolio that maximizes profit subject to target expected return and constraints is known in the art (see Patent Literature 3). [Citation List]

[Patent Literature]

[PTL 1] Japanese Patent Application Publication No. 2001-76057
[PTL 2] Japanese Patent Application Publication No. 2008-47099
[PTL 3] International Patent Application Publication No. WO 2016/183357

[Summary of Invention]

[Technical Problem]

In a conventional portfolio optimization method, for example, procedures such as setting of ownership ratios of the respective instruments (a person in charge or like sets the ownership ratios of the instruments to calculate risks), scenario creation (example: simulation of presence or absence of disaster event occurrence by the Monte Carlo method. Various events such as earthquake disaster, political turmoil, and war are made to occur at certain probabilities and loss amounts of the respective instruments upon occurrence of these events are calculated), and risk calculation (example: the scenarios are sorted in the order of the loss amount to draw a histogram and an average value of top loss amounts (TVaR) is calculated as a risk index) are repeatedly tried out to maximize return/risk.

However, when the number of scenarios, the number of events, or the variations of the ownership ratio increases, a calculation scale necessary for the aforementioned processes of the setting of the ownership ratios and the risk calculation increases linearly or exponentially. Thus, if the aforementioned financial institution or the like sets realistic conditions, it is difficult to obtain results, that is information on the optimal portfolio within practicable time.

Accordingly, the portfolio is ultimately estimated with a range that is detached from the realistic conditions and that is limited from the beginning set as a target to obtain a solution within practicable time. In this case, information on the portfolio optimized in the true sense cannot be obtained.

The conventional techniques thus have a problem that, when there are many financial instruments owned by a financial institution, many ownership ratios of the financial instruments, and many variations of scenarios to be considered, it is difficult for the financial institution to construct a portfolio that increases profitability while taking into consideration of loss amounts upon occurrence of events such as disaster.

Accordingly, an object of the present invention is to allow a financial institution to apply a portfolio that increases profitability while taking into consideration of loss amounts upon occurrence of events such as disaster and to guarantee profitability even when there are many financial instruments owned by the financial institution, many ownership ratios of the financial instruments, and many variations of scenarios to be considered.

[Solution to Problem]

In particular, it is provided a portfolio creation assistance device having the features defined in claim 1.

Further, it is provided a portfolio creation assistance method having the features defined in claim 3.

Even further, it is provided a portfolio creation assistance system having the features defined in claim 5.

Even further, it is provided a portfolio creation assistance method having the features defined in claim 6. Further preferred embodiments are defined in the dependent claims.

[Advantageous Effects of Invention]

According to the present invention, a financial institution can apply a portfolio that increases profitability while taking into consideration of loss amounts upon occurrence of events such as disaster and guarantee profitability even when there are many financial instruments owned by the financial institution, many ownership ratios of the financial instruments, and many variations of scenarios to be considered.

[Brief Description of Drawings]

[Fig. 1] Fig. 1 is a network configuration diagram including a portfolio creation assistance device according to an embodiment of the present disclosure.

[Fig. 2] Fig. 2 is a diagram illustrating a hardware configuration example of the portfolio creation assistance device according to the embodiment of the present disclosure.

[Fig. 3] Fig. 3 is a diagram illustrating a timing chart example according to the embodiment of the present disclosure.

[Fig. 4] Fig. 4 is a diagram illustrating a flowchart relating to a basic concept according to the embodiment of the present disclosure.

[Fig. 5] Fig. 5 is a diagram illustrating a data configuration example of financial instrument information according to the embodiment of the present disclosure.

[Fig. 6] Fig. 6 is a diagram illustrating a data configuration example of an event simulation result according to the embodiment of the present disclosure.

[Fig. 7] Fig. 7 is a diagram illustrating a flow example of a portfolio creation assistance method according to the embodiment of the present disclosure.

[Fig. 8] Fig. 8 is a diagram illustrating an output example according to the embodiment of the present disclosure.

[Description of Embodiments]

<Outline of Quantum Computing Technique>

A concept of a so-called combinatorial optimization problem that searches for a solution maximizing or minimizing a desired parameter under a predetermined condition can be applied also to complex problems in the real world such as elimination of traffic jams and reduction of logistic cost in a global supply chain.

Meanwhile, since the number of candidate solutions explosively increases in such a problem, it is difficult to solve the problem within practicable time unless a calculator with a reasonable calculation performance such as a super computer or a quantum computer is used.

For example, the following technique (see WO2016/157333) and the like are proposed as conventional techniques relating to a quantum computer. The technique relates to a calculator that can perform high-speed calculation on an inverse problem or a combinatorial optimization problem requiring an exhaustive search. In this technique, spins are used as variables in the calculation and a problem to be solved is set using spin-spin interaction and a local field acting on each spin. All spins are caused to orient toward one direction by an external magnetic field at time t=0 and the external magnetic field is gradually reduced such that the external magnetic field becomes zero at time t=τ. Each spin is time-evolved in such a way that the direction, which follows an effective magnetic field determined by all actions of the spin-spin interaction and the external magnetic field of each site at time t, is determined. In this case, the direction of the spin is not completely aligned in the effective magnetic field and is caused to be a quantum mechanically corrected direction such that the system is caused to maintain in an approximately ground state.

<Regarding Annealing Machine>

As described in the aforementioned outline of the quantum computing technique, the present applicant has developed a quantum computing technique to solve, for example, various problems in exhaustive search problems (including the concepts of combinatorial optimization problem) based on big data.

There are generally high expectations for a quantum computer in regard to such exhaustive search problems. In a quantum computer, data is formed of basic elements called quantum bits and "0" and "1" are achieved simultaneously. Accordingly, the quantum computer can perform calculation simultaneously with all candidate solutions set as an initial value and has a possibility of achieving the exhaustive search. However, the quantum computer needs to maintain quantum coherence over the entire calculation time.

In such a circumstance, a method referred to as adiabatic quantum computing is attracting attention (reference literature: E. Farhi, et al., "A quantum adiabatic evolution algorithm applied to random instances of an NP-complete problem, " Science 292, 472 (2001)). This method attempts to obtain a solution through a process of converting a problem such that a ground state of a certain physical system becomes a solution and finding the ground state.

The Hamiltonian of the physical system for which the problem is set is represented by $\hat{H}_p$. Note that, at the start of calculation, the Hamiltonian is not set to $\hat{H}_p$, but instead to another Hamiltonian $\hat{H}_0$ whose ground state is apparent and easy to prepare. Next, the Hamiltonian is gradually transitioned from $\hat{H}_0$ to $\hat{H}_p$ over a sufficiently-long period. If the period is sufficiently long, the system stays in the ground state and the ground state of the Hamiltonian $\hat{H}_p$ is obtained. This is the principle of the adiabatic quantum computing. When the calculation time is represented by $\tau$, the Hamiltonian is as in the formula (1).

[Formula 1]

$$\hat{H}(t) = \left(1 - \frac{t}{\tau}\right)\hat{H}_0 + \frac{t}{\tau}\hat{H}_p$$

The solution is obtained by performing time evolution based on the Schrödinger equation in the formula (2).

[Formula 2]

$$i\hbar\frac{\partial}{\partial t}\left|\psi(t)\right\rangle = \hat{H}(t)\left|\psi(t)\right\rangle$$

The adiabatic quantum computing can be applied to problems that require exhaustive search and reaches a solution in a one-way process. However, if the computing process needs to follow the Schrödinger equation in the formula (2), the quantum coherence needs to be maintained as in the quantum computer.

Note that the quantum computer is a computer that repeats a gate operation on one quantum bit or two quantum bits while the adiabatic quantum computing is computing in which quantum bits are made to interact with one another simultaneously over an entire quantum bit system, and ideas of coherence are different from each other.

For example, assume a gate operation performed on a certain quantum bit. In this case, if there is an interaction between this quantum bit and another quantum bit, this causes decoherence. However, in the adiabatic quantum computing, since all quantum bits are made to interact with one another simultaneously, the case of such an example is not decoherence. Reflecting this difference, the adiabatic quantum computing is assumed to be more robust to decoherence than the quantum computer.

As described above, the adiabatic quantum computing is effective for difficult problems such as problems that require exhaustive search. Moreover, spins are used as variables in calculation and a problem to be solved is set using spin-spin interaction and a local field acting on each spin.

All spins are caused to orient toward one direction by an external magnetic field at time t=0 and the external magnetic field is gradually reduced such that the external magnetic field becomes zero at time t=$\tau$.

Each spin is time-evolved in such a way that the direction, which follows an effective magnetic field determined by all actions of the spin-spin interaction and the external magnetic field of each site at time t, is determined.

In this case, the direction of spin is not completely aligned in the effective magnetic field and is caused to be a quantum mechanically corrected direction such that the system is caused to maintain in an approximately ground state.

Additionally, a term (relaxation term) to maintain each spin in an original direction during the time evolution is added to the effective magnetic field to improve convergence of a solution.

Although a portfolio creation assistance device according to an embodiment of the present disclosure is assumed to be an annealing machine that performs the aforementioned adiabatic quantum computing, the portfolio creation assistance device is not limited to this as a matter of course and the present invention can be applied to any device that can appropriately solve the combinatorial optimization problem according to a portfolio creation assistance method of the present invention.

Specifically, the present invention includes not only hardware implemented by an electronic circuit (digital circuit or the like) in an annealing method but also a method of implementation with a superconducting circuit or the like. Moreover, the present invention may be hardware that achieves an Ising model in methods other than the annealing method. For example, such methods include a laser network method (optical-parametric oscillation), a quantum neural network, and the like. Moreover, although the ideas are partially different as described above, the present invention can be achieved also in a quantum gate method in which calculation performed in the Ising model is replaced by gates such as a Hadamard gate, a rotation gate, and a controlled NOT gate.

<Network Configuration>

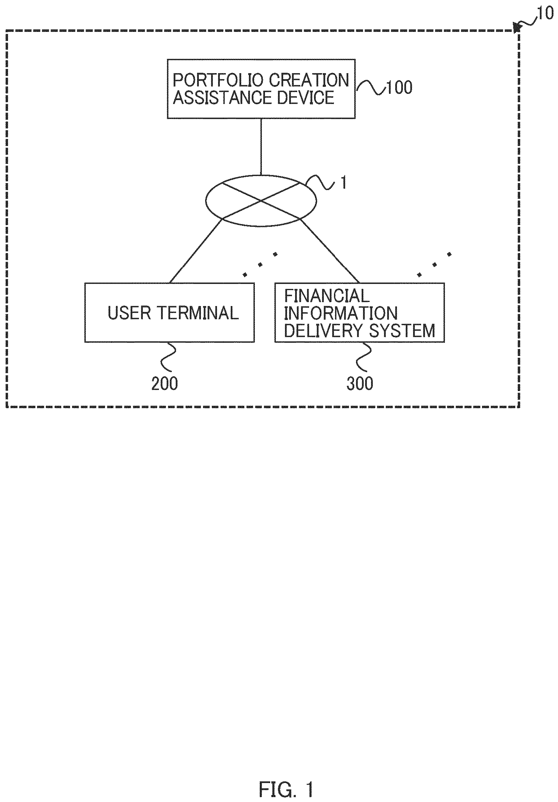

The embodiment of the present disclosure is described below in detail by using the drawings. Fig. 1 is a network configuration diagram including a portfolio creation assistance device 100 according to the embodiment of the present disclosure. The portfolio creation assistance device 100 illustrated in Fig. 1 is a computer device that can efficiently generate information on an optimal portfolio regardless of the number of instruments, the ownership ratios of the instruments, and the number of variations of scenarios to be considered even in the case of using a risk calculation method having such characteristics that the order of loss amounts in each scenario is not determined until the ownership ratios of the respective instruments are individually determined (example: VaR (value at risk), TVaR (tail value at risk), CVaR (conditional value at risk), and CTE (conditional tail expectation) in the case where loss amounts and revenues do not follow specific distribution), and is assumed to be, specifically, an annealing machine as an example.

Note that the outline of the annealing machine is as described above and details such as specific configurations and operations of the annealing machine are omitted as appropriate (the same applies below).

Moreover, the "ownership ratio" in the embodiment of the present disclosure is not a proportion of each of financial instruments in the portfolio (example: when the total investment amount in the entire portfolio is assumed to be 100, an investment amount of a financial instrument A is 30, an investment amount of a financial instrument B is 20, and the like) but a value indicating how much a buyer owns each of the financial instruments that can be included in the portfolio with respect to other buyers, that is an ownership share with respect to the other buyers. In this case, it is possible to assume a situation where, for a certain financial instrument A, a share of a user X is 40%, a share of a user Y is 20%, a share of a user Z is 5%, and the like. Determining this ownership ratio determines an amount of revenue allocated to a target user in the total revenue created by the corresponding financial instrument, that is an expected revenue. However, the ownership ratio is not limited to this as a matter of course and the present invention can be applied to any value that can be used to appropriately determine an expected revenue or an expected loss from attribute information of each financial instrument or the like.

The portfolio creation assistance device 100 according to the embodiment of the present disclosure is coupled to a user terminal 200 and a financial information delivery system 300 via an appropriate network 1 such as the Internet to be capable of performing data communication therewith. The portfolio creation assistance device 100, the user terminal 200, and the financial information delivery system 300 may be collectively considered as a portfolio optimization assistance system 10.

The user terminal 200 in the aforementioned network configuration is a terminal that receives provided information on the portfolio of the financial instruments from the portfolio creation assistance device 100.

A user of the user terminal 200 can be assumed to be, specifically, a person in charge in an institutional investor such as a financial institution or an insurance company.

Moreover, the information on the portfolio of the financial instruments provided by the portfolio creation assistance device 100 is information on the ownership ratios of the respective financial instruments at which profitability obtained from expected revenues and expected losses is maximized, the ownership ratios determined by solving a predetermined formula describing expected revenues and expected losses associated with occurrence of events corresponding to a predetermined event occurrence scenario group when the predetermined event occurrence scenario group is adopted to the portfolio holding the financial instruments at the respective ownership ratios as an Ising model (math formula including selection of scenarios ranking higher than the other scenarios in terms of expected loss, the number of scenarios to be targets of this selection, and profitability based on the expected revenues, the expected losses, and the ownership ratios as variables).

In this case, values of a rate of return, expected maximum losses, ownership ratios of the respective financial instruments in the optimal portfolio are presented as a matter of course. A person in charge in the financial institution or the like who is provided with such various pieces of information on the portfolio can easily, accurately, and quickly determine a preferable ownership ratio for each financial instrument included in the portfolio.

Meanwhile, the financial information delivery system 300 is a system that delivers information on various financial instruments and information on event simulation results to the portfolio creation assistance device 100.

The financial information delivery system 300 can be assumed to be server apparatuses that are operated by organizations that hold information on the financial instruments such as various financial institutions, securities companies, government institutions, and the like.

The aforementioned various financial instruments can be assumed to be, for example, reinsurance instruments, stocks, futures instruments, foreign exchanges as well as capital investment matters for which losses may be generated due to occurrence of events such as disaster. Moreover, the information to be handled can be assumed to be, for example, in the case of insurance instruments, an insurance target (example: storm damage, earthquake damage, and the like), a target region, an expected revenue (example: insurance premium revenue of the insurance instrument), and the like.

In a conventional case, in the determination of the ownership ratios optimal for maximizing profitability, that is the optimal portfolio, the calculation amount exponentially increases with an increase in elements such as the numbers of the aforementioned financial instruments and scenarios and setting variations of the ownership ratio, and a long period is required to complete the calculation. However, adopting the portfolio creation assistance device 100 using the annealing machine enables calculation that does not depend so much on the increase of elements.

<Hardware Configuration>

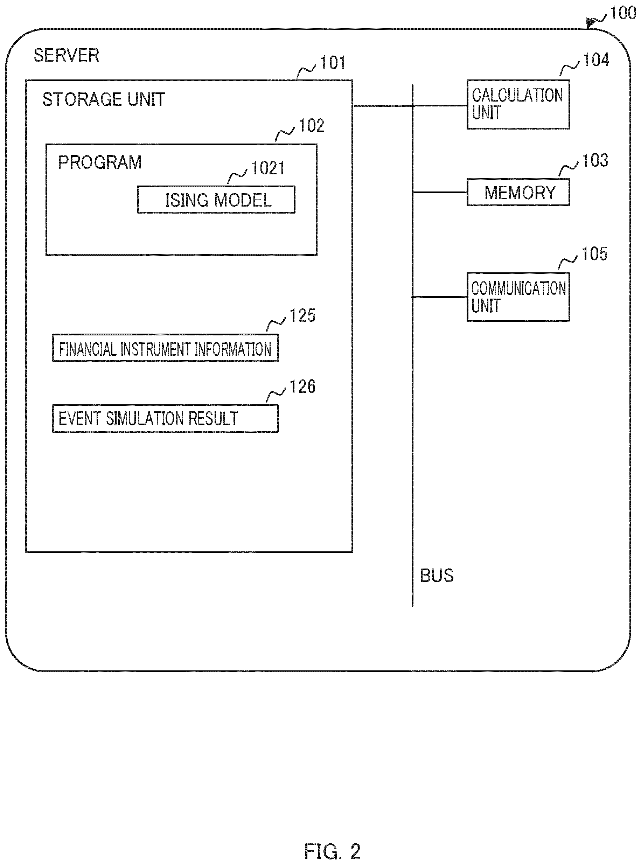

Moreover, a hardware configuration of the portfolio creation assistance device 100 according to the embodiment of the present disclosure is as illustrated in Fig. 2. Specifically, the portfolio creation assistance device 100 includes a storage unit 101, a memory 103, a calculation unit 104, and a communication unit 105.

Among these, the storage unit 101 includes an appropriate non-volatile storage element such as a SSD (solid state drive) or a hard disk drive.

Moreover, the memory 103 includes a volatile storage element such as a RAM.

Furthermore, the calculation unit 104 is a CPU that loads a program 102 stored in the storage device 101 onto the memory 103 or the like and executes the program 102 to perform integral control of the device and also performs various types of determination, calculation, and control processes.

Moreover, the communication unit 105 is a network interface card that is coupled to the network 1 to handle communication processes with other apparatuses such as the user terminal 200 and the financial information delivery system 300.

When the portfolio creation assistance device 100 is a stand-alone machine, the portfolio creation assistance device 100 preferably further includes an input device (includes a key board, a mouse, and the like) that receives key inputs and voice inputs from the user and an output unit such as a display that displays processing data.

At least financial instrument information 125 and an event simulation result 126 are stored in the storage unit 101 in addition to the program 102 for implementing functions necessary for the portfolio creation assistance device according to the embodiment of the present disclosure. Details of these pieces of information are described later.

Moreover, the program 102, that is an algorithm configured to implement operations as the annealing machine holds information on an Ising model 1021 that is a problem to be solved. The Ising model 1021 is set in advance by a manager or the like based on various pieces of information on the portfolio being the target of information provision and on the financial instruments included in the portfolio, a portfolio investment principle in the target financial institution, and the like.

Note that the adiabatic quantum computing described in the outline of the annealing machine is also known as quantum annealing and is a technique obtained by developing a classical concept of annealing into quantum mechanics. Specifically, the adiabatic quantum computing can be intrinsically performed in a classical operation and can be interpreted as computing to which quantum mechanical effects are added to improve a high-speed performance and a performance relating to accuracy rates of solutions. Accordingly, in the present invention, the calculation unit itself is a classical calculation unit and parameters that are quantum mechanically determined are introduced in a calculation process to achieve calculation method and device that are classical but include quantum mechanical effects.

Based on the aforementioned concept, in the following example, a classical algorithm that obtains a ground state as a solution and a device for achieving this algorithm are described while relationships with the adiabatic quantum computing are explained.

In the portfolio creation assistance device 100 under such premises, N variables $s_j^z$ (j=1, 2, ..., N) are in a range of $-1 \leq s_j^z \leq 1$ and a problem is set by using a local field $g_j$ and an intervariable interaction $J_{ij}$ (i, j=1, 2, ..., N).

Moreover, in the calculation unit 104, a time period is divided into m time periods and calculation is discretely performed from $t=t_0$ ($t_0=0$) to $t_m$ ($t_m=\tau$). When a variable $S_j^z(t_k)$ at each time point $t_k$ is to be obtained, $B_j^z(t_k) = \{\Sigma_i J_i S_i^z(t_{k-1}) + g_j + \text{sgn}(sj^z(t_{k-1})) \cdot g_{pina}\} \cdot t_k/\tau$ or $B_j^z(t_k) = \{\Sigma_i J_{i,j} S_j^z(t_{k-1}) + g_j + g_{pinb} \cdot Sj^z(t_{k-1})\} \cdot t_k/\tau$ is obtained by using a value of a variable $S_j^z(t_{k-1})$ (i=1, 2, ..., N) at a previous time point $t_{k-1}$ and a coefficient $g_{pina}$ or $g_{pinb}$ of a relaxation term, $S_j^z(t_k) = f(B_j^z(t_k), t_k)$ is established by determining a function f such that the range of the aforementioned variable $S_j^z(t_k)$ becomes $-1 \leq s_j^z(t_k) \leq 1$, the aforementioned variable $S_j^z$ is made to approach -1 or 1 as a time step proceeds from $t=t_0$ to $t=t_m$, and the solution is determined to be $S_j^{zd}=-1$ if $s_j^z<0$ is eventually satisfied, and is determined to be $S_j^{zd}=1$ if $S_j^z>0$ is eventually satisfied.

The coefficient $g_{pinb}$ is, for example, a value that is 50% to 200% of an average value of $|J_{ij}|$. Moreover, regarding the local field $g_j$ of the problem setting, it is possible to add a correction term $\delta g_{j'}$ to $g_{j'}$ only for a certain site j' and increase the magnitude of $g_{j'}$ only for this site j'. The correction term $\delta g_{j'}$ is, for example, a value that is 10% to 100% of the average value of $|J_{ij}|$.

Next, a basic principle of the annealing machine is described through transition to a classical format, starting from quantum mechanical description.

An Ising spin-Hamiltonian ground state search problem given in the formula (3) include a classification problem referred to as NP-hard and is known to be a useful problem (literature: F. Barahona, "On the computational complexity of Ising spin glass models," J.Phys.A: Math. Gen. 15,3241 (1982)).

[Formula 3]

$$\hat{H}_p = -\sum_{i>j} J_{ij} \hat{\sigma}_i^z \hat{\sigma}_j^z - \sum_j g_j \hat{\sigma}_j^z$$

$J_{ij}$ and $g_j$ are problem setting parameters and $\sigma^{\wedge z}$ is a z component of Pauli spin matrices and takes an eigenvalue of $\pm 1$. Moreover, i and j express sites of spins. An Ising spin is a variable that can take only $\pm 1$ as a value. In the formula (3), the eigenvalue of $\sigma^{\wedge z}$ is $\pm 1$ and the system is thus an Ising spin system.

The Ising spin of the formula (3) does not have to be literally a spin and may be physically anything as long as the Hamiltonian is described by the formula (3).

For example, it is possible to associate adopting and not-adopting of each of the ownership ratios (discrete values) of the financial instruments with $\pm 1$ or associate high and low of a logic circuit with $\pm 1$. Moreover, it is possible to associate vertically-polarized wave and horizontally-polarized wave of light with $\pm 1$ or associate phases of 0 and $\pi$ with $\pm 1$.

In the method given as an example herein, as in the adiabatic quantum computing, a calculation system is prepared in the ground state of Hamiltonian given by the formula (4) at time point t=0.

[Formula 4]

$$\hat{H}_0 = -\gamma \sum_j \hat{\sigma}_j^x$$

Here, $\gamma$ is a constant of proportion determined by the magnitude of an external field uniformly applied to all sites j, $\sigma^{\wedge x}_j$ is an x component of the Pauli spin matrices. If the calculation system is the spin itself, the external field means a magnetic field.

The formula (4) corresponds to application of a transverse magnetic field and a situation where all spins are oriented in the x direction (y>0) is the ground state. Although the Hamiltonian for problem setting is defined as the Ising spin system with only the z component, the x component of the spin appears in the formula (4). Accordingly, the spin in the calculation process is not Ising but a vector (Bloch vector). Although the Hamiltonian starts from that in the formula (4) at t=0, the Hamiltonian is made to gradually change with a progress of the time t and is eventually made to become the Hamiltonian described in the formula (3), and the ground state of this Hamiltonian is obtained as the solution.

[Formula 5]

$$\hat{H} = -\boldsymbol{B} \cdot \hat{\boldsymbol{\sigma}}$$

In this formula, $\sigma^\wedge$ represents three components of the Pauli spin matrices as a vector. When the spin is oriented in the magnetic direction, the ground state can be described as $<\sigma^\wedge>=B/|B|$ with $<\cdot>$ being a quantum mechanical expectation value. In an adiabatic process, since the system always tries to stay in the ground state, the direction of the spin always follows the direction of the magnetic field.

The above discussion can be also expanded to a multi-spin system. At t=0, the formula (4) can give the Hamiltonian. This means that magnetic field $B_j^x = \gamma$ is uniformly applied to all spins. At t>0, the x component of the magnetic field gradually decreases and $B_j^x = \gamma(1-t/\tau)$ is established. Regarding the z-component, since the spin-spin interaction is present, the effective magnetic field is as in the formula (6).

[Formula 6]

$$\hat{B}_j^z(t) = \frac{t}{\tau}\left( \sum_{i \neq j} J_{ij} \hat{\sigma}_i^z + g_j \right)$$

The direction of the spin can be specified by $<\sigma^{\wedge z}>/<\sigma^{\wedge x}>$. Accordingly, if the direction of the spin follows the effective magnetic field, the direction of the spin is determined by the formula (7).

[Formula 7]

$$\left\langle \hat{\sigma}_j^z \right\rangle \Big/ \left\langle \hat{\sigma}_j^x \right\rangle = \left\langle \hat{B}_j^z(t) \right\rangle \Big/ \left\langle \hat{B}_j^x(t) \right\rangle$$

Since the formula (7) is a quantum mechanical description but takes an expectation value, the formula (7) is a relationship formula relating to a classical quantity unlike the formulae (1) to (6).

Since non-local correlation (quantum entanglement) of quantum mechanics is absent in a classical system, the direction of the spin should be completely determined by the local field of each site and the formula (7) determines the behavior of a classical spin system. In the quantum system, the formula (7) is deformed due to presence of the non-local correlation but this is described later. In this section, the classical system determined by the formula (7) is described to describe a basic mode of the invention.

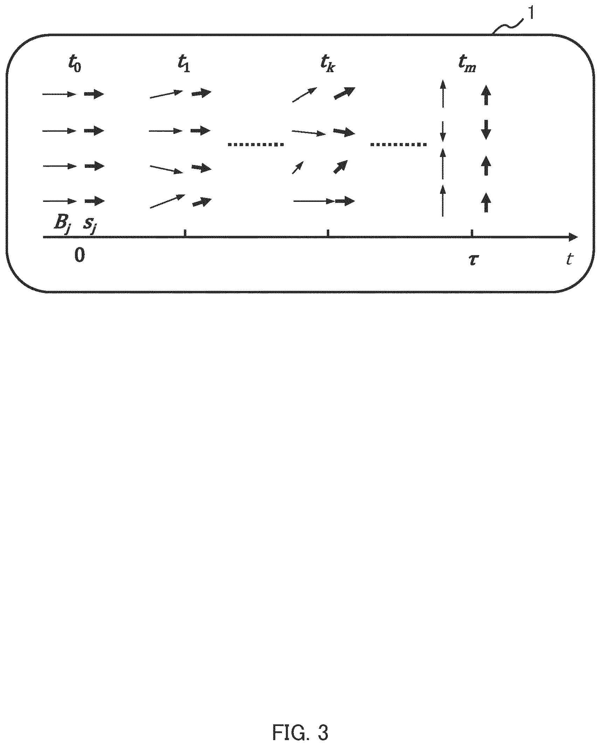

Fig. 3 illustrates a timing chart (1) for obtaining the ground state of the spin system. Since the description of Fig. 3 relates to a classical quantity, the spin of the site j is expressed by $s_j$ instead of $\sigma^\wedge_j$. Moreover, along with this, an effective magnetic field $B_j$ in Fig. 3 is a classical quantity. At t=0, a rightward effective magnetic field $B_j$ is applied at all sites and all spins $S_j$ are initialized to the rightward direction.

With a lapse of time t, the magnetic field in the z axis direction and the spin-spin interaction are gradually applied, each spin is eventually oriented in the +z direction or the -z direction, and the z component of the spin $S_j$ becomes $s_j^z=+1$ or -1. Although it is ideal for the time t to be continuous, the time t may be discrete in the actual calculation process to improve convenience. The case where the time t is discrete is described below.

Since not only the z component but also the x component is applied to the spin described in this example, the spin is a vectorial spin. The behavior of the spin as a vector can be understood also from Fig. 3. No y component appears in the description up to this point. This is because the external field direction is taken on an xz plane and there is no y component of the external field. Accordingly, $<\sigma^{\wedge Y}>=0$.

The spin of the calculation system is assumed to be a three-dimensional vector with a magnitude of 1 (this is referred to as Bloch vector and a state thereof can be described as a point on a sphere). However, in a method in which the axes are taken as in the example illustrated in the drawing, only two dimensions need to be considered (the state can be described as a point on a circle).

Moreover, since $\gamma$ is fixed, $B_j^x(t)>0$ $(\gamma>0)$ or $B_j^x(t)<0$ $(\gamma<0)$ is established. In this case, the two-dimensional spin vector can be described by using only a semicircle and, when $S_j^z$ in [-1, 1] is specified, the two-dimensional spin vector is determined by one variable $S_j^z$. Accordingly, although the spin in this example is a two-dimensional vector, the spin may be expressed as a one-dimensional continuous variable whose range is [-1, 1].

In the timing chart of Fig. 3, the effective magnetic field is obtained for each site at time point $t=t_k$ and the direction of the spin at $t=t_k$ is obtained by the formula (8) while using the value of the effective magnetic field.

[Formula 8]

$$ s_j^z(t_k) \Big/ s_j^x(t_k) = B_j^z(t_k) \Big/ B_j^x(t_k) $$

Since the formula (8) is the formula (7) rewritten in notation relating to a classical quantity, there is no symbol $<\cdot>$.

Next, an effective magnetic field at $t=t_{k+1}$ is obtained by using the value of the spin at $t=t_k$. The effective magnetic field at each time point is written specifically as the formulae (9) and (10).

[Formula 9]

$$ B_j^x(t_{k+1}) = \left(1 - \frac{t_{k+1}}{\tau}\right)\gamma $$

[Formula 10]

$$ B_j^z(t_{k+1}) = \frac{t_{k+1}}{\tau}\left(\sum_{i \neq j} J_{ij} s_i^z(t_k) + g_j\right) $$

The spin and the effective magnetic field are alternately obtained hereinafter according to the procedure schematically illustrated in the timing chart of Fig. 3.

In a classical system, the magnitude of a spin vector is 1. In this case, components of the spin vector are described as $S_j^z(t_k) = \sin\theta$ and $S_j^x(t_k) = \cos\theta$, respectively, by using a parameter $\theta$ defined by $\tan\theta = B_j^z(t_k) / B_j^x(t_k)$.

$Sj^z(t_k)$ and $Sj^x(t_k)$ are written as $Sj^z(t_k) = \sin(\arctan(B_j^z(t_k)/B_j^x(t_k)))$ and $Sj^x(t_k) = \cos(\arctan(B_j^z(t_k)/B_j^x(t_k)))$.

As apparent from the formula (9), $t_k$ is the only variable in $B_j^x(t_k)$ and $\tau$ and $\gamma$ are constants. Accordingly, $Sj^z(t_k) = \sin(\arctan(B_j^z(t_k)/B_j^x(t_k)))$ and $S_j^x(t_k) = \cos(\arctan(B_j^z(t_k)/B_j^x(t_k)))$ can be generally expressed as $Sj^z(t_k) = f_1(B_j^z(t_k), t_k)$ and $S_j^x(t_k) = f_2(B_j^z(t_k), t_k)$ as functions including $B_j^z(t_k)$ and $t_k$ as variables.

Since the spin is described as the two-dimensional vector, two components of $Sj^z(t_k)$ and $S_j^x(t_k)$ appear. However, when $B_j^z(t_k)$ is determined based on the formula (10), $S_j^x(t_k)$ is unnecessary.

This corresponds to the fact that the spin state can be described by using only $S_j^x(t_k)$ whose range is [-1, 1]. The final solution $S_j^{zd}$ needs to be $Sj^{zd}=-1$ or 1, and $S_j^{zd}=1$ when $S_j^z(\tau) > 0$ while $S_j^{zd}=-1$ when $S_j^z(\tau) < 0$.

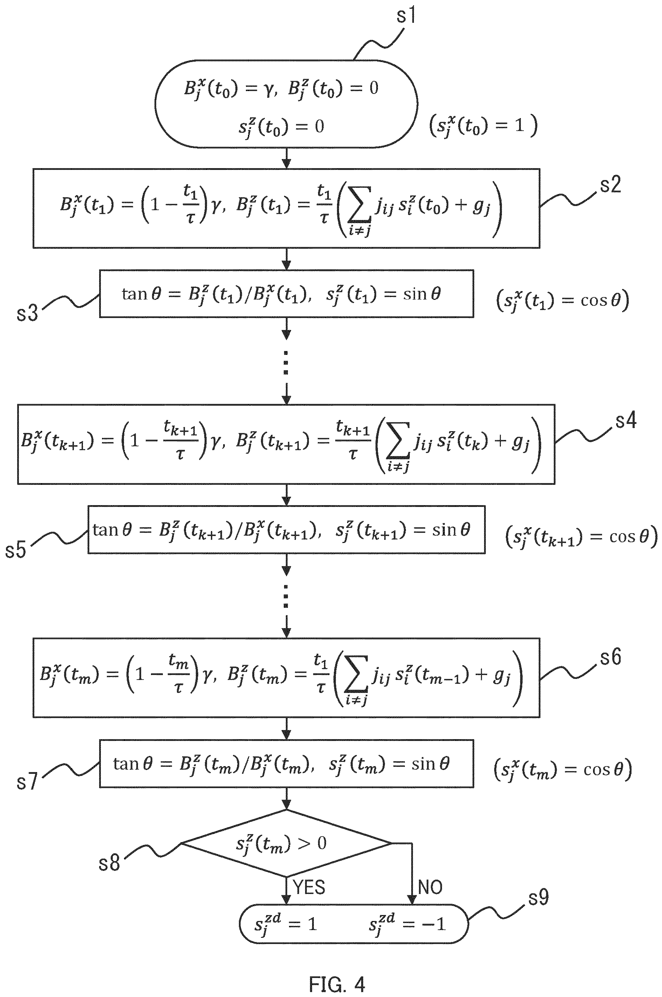

Fig. 4 illustrates a diagram in which the aforementioned algorithm is summarized into a flowchart. In this case, $t_m = \tau$. Each of steps s1 to s9 in the flowchart of Fig. 4 corresponds to a process at a certain time point in the timing chart of Fig. 3 from time of $t=0$ to $t=\tau$. Specifically, the steps s2, s4, and s6 in the flowchart correspond to the aforementioned formulae (9) and (10) at $t=t_1$, $t_{k+1}$, and $t_m$, respectively. The final solution is determined such that $S_j^{zd}=-1$ when $s_j^z < 0$ in step s8 and $S_j^{zd}=1$ when $S_j^z > 0$ in step s8 (s9).

How the problem is solved when the problem is expressed by the formula (3) has been described above. Next, how a specific problem is expressed by the formula (3) including the local field $g_j$ and the intervariable interaction $J_{ij}(i, j=1, 2, ..., N)$ is described by giving a specific example.

The specific problem, that is the Ising model 1021 in this case is assumed to be a problem of estimating the ownership ratios of the respective financial instruments at which the expected revenue-expected loss, that is the result of the formula of profitability is maximized in a predetermined number of scenarios corresponding to occurrence of events such as disasters. Under such premise, a balance point where the ownership ratios of the respective financial instruments converge is determined through searching of the ground state of the Ising model 1021 expressed by the formula (3), that is searching of the aforementioned ground state in which the result of the formula of profitability is maximized. The ownership ratios of the respective financial instruments in this ground state are (the ownership ratios of the respective financial instruments included in) the optimal portfolio.

<Data Structure Example>

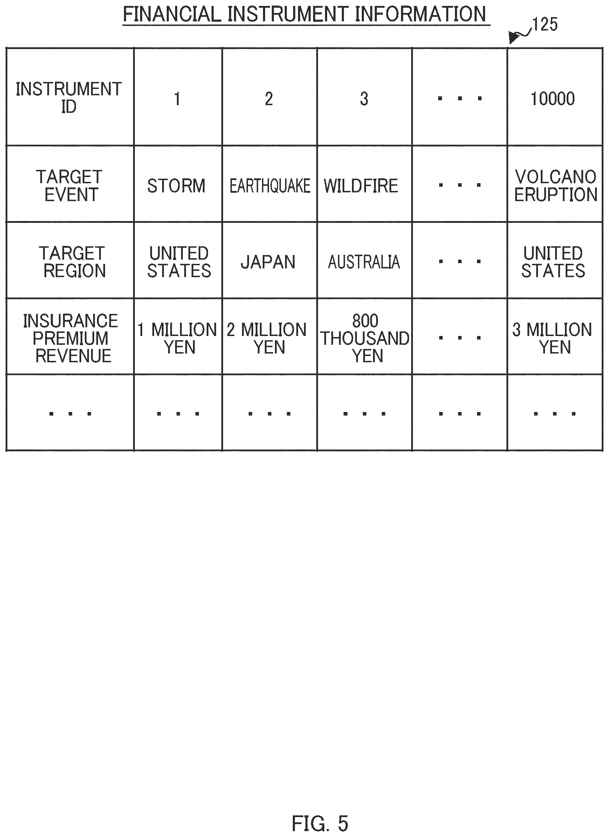

Next, data used by the portfolio creation assistance device 100 according to the embodiment of the present disclosure is described. Fig. 5 illustrates an example of the financial instrument information 125 according to the embodiment of the present disclosure. The financial instrument information 125 is a database storing attribute information of the financial instruments that may be included in the portfolio.

The data structure of the financial instrument information 125 is a collection of records that each use an instrument ID, uniquely identifying an insurance instrument being the financial instrument, as a key and that are each formed of data such as events and regions being insurance targets of the insurance instrument and an insurance premium revenue, that is the expected revenue.

In the example of Fig. 5, the financial instrument information 125 has a configuration storing information on a total of 10,000 insurance instruments. Specifically, the shares, that is the ownership ratios of the respective 10,000 insurance instruments in the case where these insurance instruments are incorporated as the portfolio can be determined.

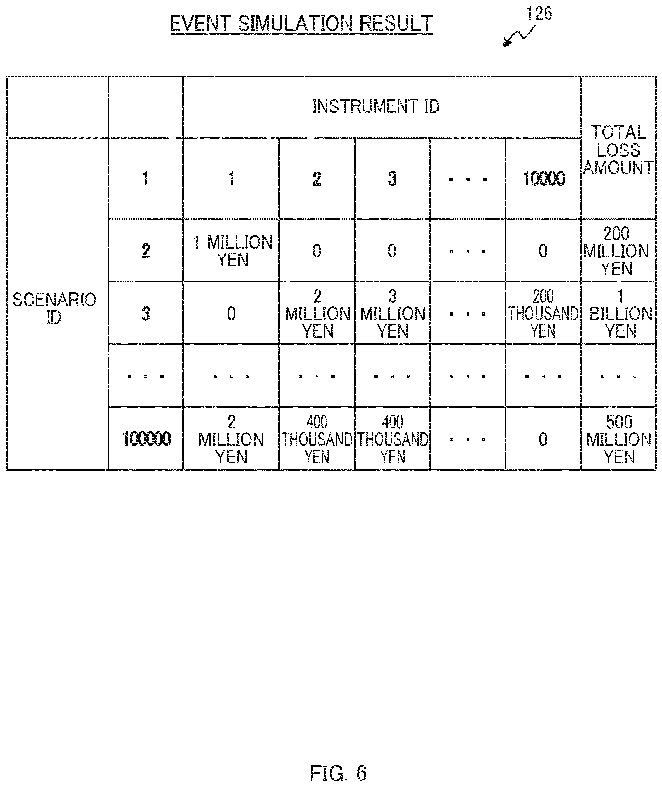

Moreover, Fig. 6 illustrates an example of an event simulation result 127 according to the embodiment of the present disclosure. The event simulation result 126 is, for example, a database as follows. Insurance companies and the like that are the distributors of the aforementioned insurance instruments assume scenarios in which events such as natural disasters, political turmoil, and wars occur, and information on loss amounts generated in relation to the aforementioned insurance instruments in the case where each scenario takes place and the corresponding events occur are stored in the database.

The data structure of the event simulation result 126 is a collection of records that are each formed of data such as values of the loss amounts of the respective insurance instruments in the case where each scenario takes place and the total loss amount of the insurance instruments generated in relation to the scenario, in a matrix structure of scenario IDs uniquely identifying the respective scenarios and the instrument IDs uniquely identifying the respective insurance instruments.

In the example of Fig. 6, the event simulation result 126 has a configuration storing information on the loss amounts for each of combinations of a total of 10,000 insurance instruments and a total of 100,000 scenarios. Specifically, the loss amounts of the respective 10,000 insurance instruments that can be incorporated as the portfolio and the total of these loss amounts in each of the 100,000 scenarios can be used for a process of portfolio optimization.

<Portfolio Creation Assistance Method>

An actual procedure of the portfolio creation assistance method according to the embodiment of the present disclosure is described below based on the drawings. Various operations corresponding to the portfolio creation assistance method described below are implemented by a program loaded onto a memory and executed by the portfolio creation assistance device 100 according to the embodiment of the present disclosure. This program includes codes for performing various operations described below.

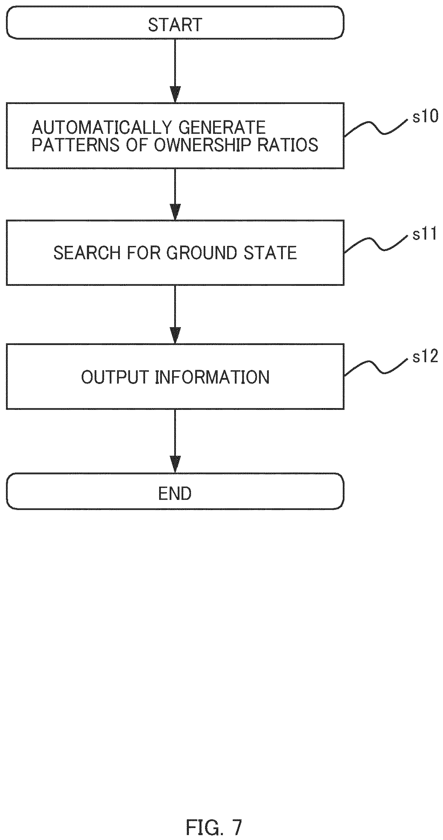

Fig. 7 is a diagram illustrating a flow example of the portfolio creation assistance method according to the embodiment of the present disclosure. In this case, it is assumed that the portfolio creation assistance device 100 sets the aforementioned Ising model 1021 as the problem and calculates the ground state as the annealing machine for, for example, a portfolio including 10,000 insurance instruments (Figs. 5 and 6). Note that the 10,000 financial instruments given as an example herein are the insurance instruments "1" to "10,000" illustrated in Figs. 5 and 6.

Moreover, the number of scenarios to be assumed is 100,000 and, in the case of, for example, 99% TVaR, the estimated loss is assumed to be an average value of top 1,000 ($100,000 \times (1-0.99)$) loss amounts.

First, the portfolio creation assistance device 100 automatically generates, for example, combinations of the shares, that is the ownership ratios of the respective insurance instruments among the variables in the formula of "expected revenue-expected loss" described above (s10). For example, assume combinations in the case where the number of insurance instruments is "5" and coefficients from 0% to 100% in increments of 10% are provided. In this case, the number of combinations is "161051".

Next, the portfolio creation assistance device 100 sets as many types of the Ising models 1021 as the combinations of the coefficients, that is the ownership ratios generated in s10 as the problem and calculates the ground state as the annealing machine for the portfolio including 10,000 financial instruments as described above, under a condition of maximizing the rate of return, with the 1,000 scenarios determined by 99% TVaR among the 100,000 scenarios being targets, and estimates the optimal ownership ratios of the respective insurance instruments in the portfolio (s11). Such searching of the ground state is similar to the process in the known technique.

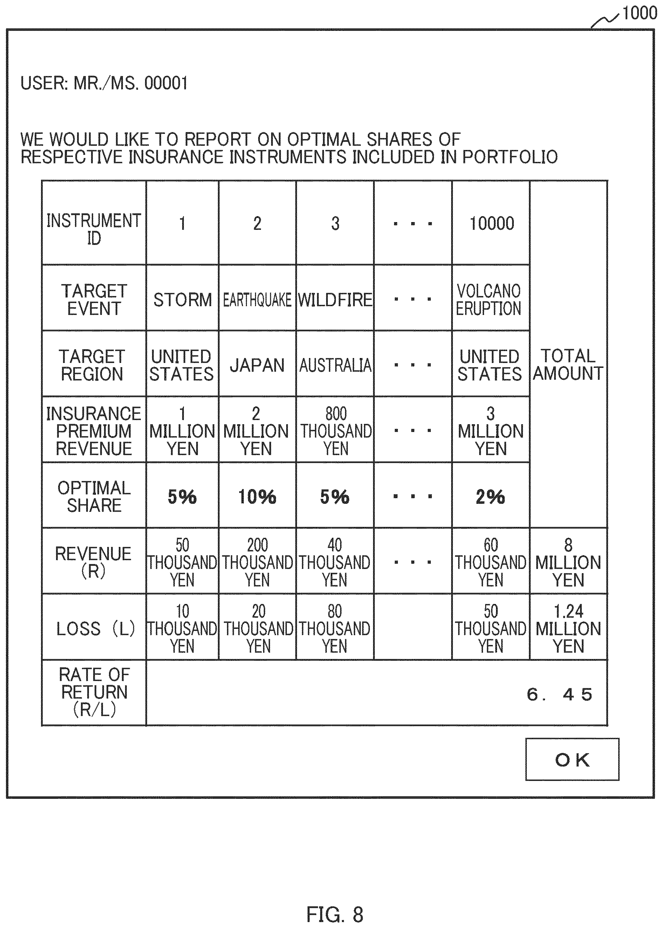

Fig. 8 illustrates results of the aforementioned process of s11, that is the optimal shares of the respective insurance instruments included in the portfolio and the values of revenues, losses, and rate of return in this case.

Next, the portfolio creation assistance device 100 sets the process results of Fig. 8, that is the shares of the respective insurance instruments in the portfolio and the values of expected revenues and expected losses in a predetermined screen and outputs data of this screen to the user terminal 200 (s12).

Meanwhile, the user can view Fig. 8 described above in the user terminal 200 and recognize, for example, the shares of the respective insurance instruments included in the portfolio and the values of expected revenues and expected losses in this case to examine the portfolio optimization.

Although the best mode for carrying out the present invention and the like have been specifically described above, the present invention is not limited to these and various modifications can be made within a scope not departing from the gist of the present invention.

According to the aforementioned embodiment of the present disclosure, even in the case of using a risk calculation method (example: VaR, TVaR, CVaR, and CTE in the case where loss amounts and revenues do not follow specific distribution) having such characteristics that the order of loss amounts in each scenario is not determined until the ownership ratios of the respective instruments are individually determined, information on the optimal portfolio can be efficiently generated irrespective of the number of instruments, the ownership ratios of the instruments, and the number of variations of scenarios to be considered.

At least the following matters are apparent from the statements of the present description. Specifically, in the portfolio creation assistance device according to the embodiment of the present disclosure, the calculation unit may be a unit that calculates, as the predetermined formula, a formula obtained by combining items of the selection of scenarios ranking higher than the other scenarios in terms of expected loss, the number of scenarios to be targets of this selection, and the profitability based on the expected revenues, the expected losses, and the ownership ratios, as the Ising model.

In this configuration, even in the case of using a risk calculation method (example: VaR, TVaR, CVaR, and CTE in the case where the loss amounts and the revenues do not follow specific distribution) having such characteristics that the order of loss amounts in each scenario is not determined until the ownership ratios of the respective instruments are individually determined, information on the optimal portfolio can be generated even more efficiently irrespective of the number of instruments, the ownership ratios of the instruments, and the number of variations of scenarios to be considered.

Moreover, the portfolio creation assistance device according to the embodiment of the present disclosure may be a CMOS annealing machine that solves a combinatorial optimization problem in regard to the Ising model.

In this configuration, it is possible to simulate operations of the Ising model in a circuit using elements such as semiconductor CMOS (complementary metal oxide semiconductor) and efficiently obtain a practical solution of the combinatorial optimization problem such as determination of the optimal ownership ratios of the financial instruments in the portfolio, at room temperature. Moreover, even in the case of using a risk calculation method (example: VaR, TVaR, CVaR, and CTE in the case where the loss amounts and the revenues do not follow specific distribution) having such characteristics that the order of loss amounts in each scenario is not determined until the ownership ratios of the respective instruments are individually determined, information on the optimal portfolio can be efficiently generated irrespective of the number of instruments, the ownership ratios of the instruments, and the number of variations of scenarios to be considered.

Moreover, in the portfolio creation assistance method according to the embodiment of the present disclosure, the information processing device may calculate, as the predetermined formula, a formula obtained by combining items of the selection of scenarios ranking higher than the other scenarios in terms of expected loss, the number of scenarios to be targets of this selection, and the profitability based on the expected revenues, the expected losses, and the ownership ratios, as the Ising model.

Moreover, in the portfolio creation assistance method according to the embodiment of the present disclosure, the information processing device may be a CMOS annealing machine that solves a combinatorial optimization problem in regard to the Ising model.

[Reference Signs List]

    1 network
    10 portfolio optimization assistance system
    100 portfolio creation assistance device
    101 storage unit
    102 program

1021 Ising model
103 memory
104 calculation unit
105 communication unit
125 financial instrument information
126 event simulation result
200 user terminal
300 financial information delivery system

**Claims**

1. A portfolio creation assistance device comprising:

   a calculation unit (104) configured to calculate a predetermined formula as an Ising model (1021) based on attribute information on each of financial instruments and information on an expected loss in each of the financial instruments associated with scenarios of event occurrence, the predetermined formula describing expected revenues and expected losses associated with the event occurrence corresponding to each of predetermined scenario groups when the predetermined scenario group is adopted to a portfolio formed by combining the financial instruments at predetermined ownership ratios, wherein
   the calculation unit (104) is configured to output to a predetermined device information on the ownership ratios at which profitability obtained from the expected revenues and the expected losses as a result of the calculation is high, and wherein
   the portfolio creation assistance device (100) is a CMOS annealing machine configured to solve a combinatorial optimization problem in regard to the Ising model (1021), and wherein the portfolio creation assistance device (100) is configured to generate combinations of the ownership ratios of each of the financial instruments, is configured to set as many types of the Ising models (1021) as the combinations, and is configured to solve the combinatorial optimization problem in regard to each of the Ising models (1021).

2. The portfolio creation assistance device according to claim 1, wherein
   the calculation unit (104) is configured to calculate, as the predetermined formula, a formula obtained by combining items of selection of scenarios ranking higher than the other scenarios in terms of the expected loss, the number of scenarios to be targets of the selection, and the profitability based on the expected revenues, the expected losses, and the ownership ratios, as the Ising model (1021).

3. A portfolio creation assistance method implemented by an information processing device, comprising:

   calculating a predetermined formula as an Ising model (1021) based on attribute information on each of financial instruments and information on an expected loss in each of the financial instruments associated with scenarios of event occurrence, the predetermined formula describing expected revenues and expected losses associated with the event occurrence corresponding to each of predetermined scenario groups when the predetermined scenario groups are adopted to a portfolio formed by combining the financial instruments at predetermined ownership ratios, and
   outputting to a predetermined device information on the ownership ratios at which profitability obtained from the expected revenues and the expected losses as a result of the calculation is high, wherein
   the information processing device is a CMOS annealing machine configured to solve a combinatorial optimization problem in regard to the Ising model (1021), and wherein the portfolio creation assistance device (100) is configured to generate combinations of the ownership ratios of each of the financial instruments, is configured to set as many types of the Ising models (1021) as the combinations, and is configured to solve the combinatorial optimization problem in regard to each of the Ising models (1021).

4. The portfolio creation assistance method according to claim 3, wherein
   the information processing device is configured to calculate, as the predetermined formula, a formula obtained by combining items of selection of scenarios ranking higher than the other scenarios in terms of the expected loss, the number of scenarios to be targets of the selection, and the profitability based on the expected revenues, the expected losses, and the ownership ratios, as the Ising model (1021).

5. A portfolio creation assistance system configured to present ownership ratios of a plurality of financial instruments owned by a user such that profitability of the user increases, the portfolio creation assistance system comprising:

a financial information delivery system (300) configured to deliver attribute information on each of the financial instruments and information on an expected loss in each of the financial instruments associated with scenarios of event occurrence;
the portfolio creation assistance device (100) according to claim 1 configured to

calculate the predetermined formula as the Ising model (1021) based on the attribute information and the information on the expected loss received from the financial information delivery system (300), and compute information on the ownership ratios at which profitability is maximized; and

a user terminal (200) configured to display the information on the ownership ratios received from the portfolio creation assistance device (100).

6. A portfolio creation assistance method of presenting ownership ratios of a plurality of financial instruments owned by a user such that profitability of the user increases, wherein

a financial information delivery system (300), a portfolio creation assistance device (100), and a user terminal (200) are coupled to one another via a network (1) to be communicable with one another,
the financial information delivery system (300) delivers attribute information on each of the financial instruments and information on an expected loss in each of the financial instruments associated with scenarios of event occurrence to the portfolio creation assistance device (100),
the portfolio creation assistance device (100)

calculates the predetermined formula as the Ising model (1021) based on the attribute information and the information on the expected loss received from the financial information delivery system (300) and computes information on the ownership ratios at which profitability is maximized according to claim 3, and

the user terminal (200) displays the information on the ownership ratios received from the portfolio creation assistance device (100).

## Patentansprüche

1. Unterstützungsvorrichtung zur Portfolioerstellung, umfassend:

eine Berechnungseinheit (104), die konfiguriert ist, um eine vorbestimmte Formel als ein Ising-Modell (1021) basierend auf Attributinformationen über jedes der Finanzinstrumente und Informationen über einen erwarteten Verlust in jedem der Finanzinstrumente, die mit Szenarien des Auftretens eines Ereignisses verknüpft sind, zu berechnen, wobei die vorbestimmte Formel erwartete Erträge und erwartete Verluste, die mit dem Auftreten des Ereignisses verknüpft sind, entsprechend jeder der vorbestimmten Szenariogruppen beschreibt, wenn die vorbestimmte Szenariogruppe in ein Portfolio übernommen wird, das durch Kombinieren der Finanzinstrumente mit vorbestimmten Eigentumsverhältnissen gebildet wird, wobei
die Berechnungseinheit (104) konfiguriert ist, um an eine vorbestimmte Vorrichtung Informationen über die Eigentumsverhältnisse auszugeben, bei denen die Rentabilität, die aus den erwarteten Erträgen und den erwarteten Verlusten als ein Ergebnis der Berechnung erhalten wird, hoch ist, und wobei
die Unterstützungsvorrichtung zur Portfolioerstellung (100) eine CMOS-Glühmaschine ist, die konfiguriert ist, um ein kombinatorisches Optimierungsproblem in Bezug auf das Ising-Modell (1021) zu lösen, und wobei die Unterstützungsvorrichtung zur Portfolioerstellung (100) konfiguriert ist, um Kombinationen der Eigentumsverhältnisse jedes der Finanzinstrumente zu erzeugen, konfiguriert ist, um so viele Typen der Ising-Modelle (1021) wie die Kombinationen einzustellen, und konfiguriert ist, um das kombinatorische Optimierungsproblem in Bezug auf jedes der Ising-Modelle (1021) zu lösen.

2. Unterstützungsvorrichtung zur Portfolioerstellung nach Anspruch 1, wobei
die Berechnungseinheit (104) konfiguriert ist, um als die vorbestimmte Formel eine Formel zu berechnen, die durch Kombinieren von Elementen der Auswahl von Szenarien, die höher als die anderen Szenarien hinsichtlich des erwarteten Verlusts rangieren, der Anzahl von Szenarien, die Ziele der Auswahl sein sollen, und der Rentabilität basierend auf den erwarteten Erträgen, den erwarteten Verlusten und den Eigentumsverhältnissen als das Ising-Modell (1021) erhalten wird.

3. Unterstützungsverfahren zur Portfolioerstellung, das durch eine Informationsverarbeitungsvorrichtung implementiert wird, umfassend:

Berechnen einer vorbestimmten Formel als ein Ising-Modell (1021) basierend auf Attributinformationen über jedes der Finanzinstrumente und Informationen über einen erwarteten Verlust in jedem der Finanzinstrumente, die mit Szenarien des Auftretens eines Ereignisses verknüpft sind, wobei die vorbestimmte Formel erwartete Erträge und erwartete Verluste, die mit dem Auftreten des Ereignisses verknüpft sind, entsprechend jeder der vorbestimmten Szenariogruppen beschreibt, wenn die vorbestimmten Szenariogruppen in ein Portfolio übernommen werden, das durch Kombinieren der Finanzinstrumente mit vorbestimmten Eigentumsverhältnissen gebildet wird, und

Ausgeben an eine vorbestimmte Vorrichtung von Informationen über die Eigentumsverhältnisse, bei denen die Rentabilität, die aus den erwarteten Erträgen und den erwarteten Verlusten als ein Ergebnis der Berechnung erhalten wird, hoch ist, wobei

die Informationsverarbeitungsvorrichtung eine CMOS-Glühmaschine ist, die konfiguriert ist, um ein kombinatorisches Optimierungsproblem in Bezug auf das Ising-Modell (1021) zu lösen, und wobei die Unterstützungsvorrichtung zur Portfolioerstellung (100) konfiguriert ist, um Kombinationen der Eigentumsverhältnisse jedes der Finanzinstrumente zu erzeugen, konfiguriert ist, um so viele Typen der Ising-Modelle (1021) wie die Kombinationen einzustellen, und konfiguriert ist, um das kombinatorische Optimierungsproblem in Bezug auf jedes der Ising-Modelle (1021) zu lösen.

4. Unterstützungsverfahren zur Portfolioerstellung nach Anspruch 3, wobei
die Informationsverarbeitungsvorrichtung konfiguriert ist, um als die vorbestimmte Formel eine Formel zu berechnen, die durch Kombinieren von Elementen der Auswahl von Szenarien, die höher als die anderen Szenarien hinsichtlich des erwarteten Verlusts rangieren, der Anzahl von Szenarien, die Ziele der Auswahl sein sollen, und der Rentabilität basierend auf den erwarteten Erträgen, den erwarteten Verlusten und den Eigentumsverhältnissen als das Ising-Modell (1021) erhalten wird.

5. Unterstützungssystem zur Portfolioerstellung, das konfiguriert ist, um Eigentumsverhältnisse einer Vielzahl von Finanzinstrumenten, die sich im Besitz eines Benutzers befinden, derart darzustellen, dass die Rentabilität des Benutzers zunimmt, wobei das Unterstützungssystem zur Portfolioerstellung umfasst:

ein Finanzinformationsliefersystem (300), das konfiguriert ist, um Attributinformationen über jedes der Finanzinstrumente und Informationen über einen erwarteten Verlust in jedem der Finanzinstrumente, die mit Szenarien des Auftretens eines Ereignisses verknüpft sind, zu liefern;
die Unterstützungsvorrichtung zur Portfolioerstellung (100) nach Anspruch 1, die konfiguriert ist, um

die vorbestimmte Formel als das Ising-Modell (1021) basierend auf den Attributinformationen und den Informationen über den erwarteten Verlust, die von dem Finanzinformationsliefersystem (300) empfangen werden, zu berechnen, und
Informationen über die Eigentumsverhältnisse zu berechnen, bei denen die Rentabilität maximiert ist; und

ein Benutzerendgerät (200), das konfiguriert ist, um die Informationen über die Eigentumsverhältnisse, die von der Unterstützungsvorrichtung zur Portfolioerstellung (100) empfangen werden, anzuzeigen.

6. Unterstützungsverfahren zur Portfolioerstellung zum Darstellen von Eigentumsverhältnissen einer Vielzahl von Finanzinstrumenten, die sich im Besitz eines Benutzers befinden, derart, dass die Rentabilität des Benutzers zunimmt, wobei

ein Finanzinformationsliefersystem (300), eine Unterstützungsvorrichtung zur Portfolioerstellung (100) und ein Benutzerendgerät (200) über ein Netzwerk (1) miteinander gekoppelt sind, um miteinander kommunizierbar zu sein,
das Finanzinformationsliefersystem (300) Attributinformationen über jedes der Finanzinstrumente und Informationen über einen erwarteten Verlust in jedem der Finanzinstrumente, die mit Szenarien des Auftretens eines Ereignisses verknüpft sind, an die Unterstützungsvorrichtung zur Portfolioerstellung (100) liefert,
die Unterstützungsvorrichtung zur Portfolioerstellung (100)

die vorbestimmte Formel als das Ising-Modell (1021) basierend auf den Attributinformationen und den Informationen über den erwarteten Verlust, die von dem Finanzinformationsliefersystem (300) empfangen werden, berechnet und

Informationen über die Eigentumsverhältnisse, bei denen die Rentabilität maximiert ist, gemäß Anspruch 3 berechnet, und

das Benutzerendgerät (200) die Informationen über die Eigentumsverhältnisse, die von der Unterstützungsvorrichtung zur Portfolioerstellung (100) empfangen werden, anzeigt.

## Revendications

1. Dispositif d'aide à la création de portefeuille comprenant :

    une unité de calcul (104) configurée pour calculer une formule prédéterminée en tant que modèle Ising (1021) sur la base d'informations d'attribut sur chacun des instruments financiers et d'informations sur une perte attendue dans chacun des instruments financiers associés à des scénarios d'occurrence d'événement, la formule prédéterminée décrivant des revenus attendus et des pertes attendues associés à l'occurrence d'événement correspondant à chacun des groupes de scénarios prédéterminés lorsque le groupe de scénarios prédéterminé est adopté pour un portefeuille formé en combinant les instruments financiers à des taux de propriété prédéterminés, dans lequel
    l'unité de calcul (104) est configurée pour délivrer en sortie à un dispositif prédéterminé des informations sur les taux de propriété auxquels la rentabilité obtenue à partir des revenus attendus et des pertes attendues à la suite du calcul est élevée, et dans lequel
    le dispositif d'aide à la création de portefeuille (100) est une machine de recuit CMOS configurée pour résoudre un problème d'optimisation combinatoire par rapport au modèle Ising (1021), et dans lequel le dispositif d'aide à la création de portefeuille (100) est configuré pour générer des combinaisons des taux de propriété de chacun des instruments financiers, est configuré pour définir autant de types des modèles Ising (1021) que les combinaisons, et est configuré pour résoudre le problème d'optimisation combinatoire par rapport à chacun des modèles Ising (1021).

2. Dispositif d'aide à la création de portefeuille selon la revendication 1, dans lequel
    l'unité de calcul (104) est configurée pour calculer, en tant que formule prédéterminée, une formule obtenue en combinant des éléments de sélection de scénarios classés plus haut que les autres scénarios en termes de perte attendue, le nombre de scénarios devant être des cibles de la sélection, et la rentabilité sur la base des revenus attendus, des pertes attendues, et des taux de propriété, en tant que modèle Ising (1021).

3. Procédé d'aide à la création de portefeuille mis en œuvre par un dispositif de traitement d'informations, comprenant :

    le calcul d'une formule prédéterminée en tant que modèle Ising (1021) sur la base d'informations d'attribut sur chacun des instruments financiers et **d'informations** sur une perte attendue dans chacun des instruments financiers associés à des scénarios d'occurrence d'événement, la formule prédéterminée décrivant des revenus attendus et des pertes attendues associés à l'occurrence d'événement correspondant à chacun des groupes de scénarios prédéterminés lorsque les groupes de scénarios prédéterminés sont adoptés pour un portefeuille formé en combinant les instruments financiers à des taux de propriété prédéterminés, et
    la délivrance en sortie à un dispositif prédéterminé d'informations sur les taux de propriété auxquels la rentabilité obtenue à partir des revenus attendus et des pertes attendues à la suite du calcul est élevée, dans lequel
    le dispositif de traitement d'informations est une machine de recuit CMOS configurée pour résoudre un problème d'optimisation combinatoire par rapport au modèle Ising (1021), et dans lequel le dispositif d'aide à la création de portefeuille (100) est configuré pour générer des combinaisons des taux de propriété de chacun des instruments financiers, est configuré pour définir autant de types des modèles Ising (1021) que les combinaisons, et est configuré pour résoudre le problème d'optimisation combinatoire par rapport à chacun des modèles Ising (1021).

4. Procédé d'aide à la création de portefeuille selon la revendication 3, dans lequel
    le dispositif de traitement d'informations est configuré pour calculer, en tant que formule prédéterminée, une formule obtenue en combinant des éléments de sélection de scénarios classés plus haut que les autres scénarios en termes de perte attendue, le nombre de scénarios devant être des cibles de la sélection, et la rentabilité sur la base des revenus attendus, des pertes attendues, et des taux de propriété, en tant que modèle Ising (1021).

**5.** Système d'aide à la création de portefeuille configuré pour présenter des taux de propriété d'une pluralité d'instruments financiers détenus par un utilisateur de sorte que la rentabilité de l'utilisateur augmente, le système d'aide à la création de portefeuille comprenant :

un système de fourniture d'informations financières (300) configuré pour fournir des informations d'attribut sur chacun des instruments financiers et des informations sur une perte attendue dans chacun des instruments financiers associés à des scénarios d'occurrence d'événement ;
le dispositif d'aide à la création de portefeuille (100) selon la revendication 1 configuré pour

calculer la formule prédéterminée en tant que modèle Ising (1021) sur la base des informations d'attribut et des informations sur la perte attendue reçues du système de fourniture d'informations financières (300), et calculer des informations sur les taux de propriété auxquels la rentabilité est maximisée ; et

un terminal utilisateur (200) configuré pour afficher les informations sur les taux de propriété reçues du dispositif d'aide à la création de portefeuille (100).

**6.** Procédé d'aide à la création de portefeuille consistant à présenter des taux de propriété d'une pluralité **d'instruments** financiers détenus par un utilisateur de sorte que la rentabilité de l'utilisateur augmente, dans lequel

un système de fourniture d'informations financières (300), un dispositif d'aide à la création de portefeuille (100) et un terminal utilisateur (200) sont couplés les uns aux autres via un réseau (1) pour pouvoir communiquer les uns avec les autres,
le système de fourniture d'informations financières (300) fournit des informations d'attribut sur chacun des instruments financiers et des informations sur une perte attendue dans chacun des instruments financiers associés à des scénarios d'occurrence d'événement au dispositif d'aide à la création de portefeuille (100),
le dispositif d'aide à la création de portefeuille (100)

calcule la formule prédéterminée en tant que modèle Ising (1021) sur la base des informations d'attribut et des informations sur la perte attendue reçues du système de fourniture d'informations financières (300), et calcule des informations sur les taux de propriété auxquels la rentabilité est maximisée selon la revendication 3, et

le terminal utilisateur (200) affiche les informations sur les taux de propriété reçues du dispositif d'aide à la création de portefeuille (100).

FIG. 1

FIG. 2

FIG. 3

s1

$$B_j^x(t_0) = \gamma, \quad B_j^z(t_0) = 0$$
$$s_j^z(t_0) = 0 \qquad \left( s_j^x(t_0) = 1 \right)$$

s2

$$B_j^x(t_1) = \left(1 - \frac{t_1}{\tau}\right)\gamma, \quad B_j^z(t_1) = \frac{t_1}{\tau}\left(\sum_{i \neq j} j_{ij}\, s_i^z(t_0) + g_j\right)$$

s3

$$\tan\theta = B_j^z(t_1)/B_j^x(t_1), \quad s_j^z(t_1) = \sin\theta \qquad \left( s_j^x(t_1) = \cos\theta \right)$$

s4

$$B_j^x(t_{k+1}) = \left(1 - \frac{t_{k+1}}{\tau}\right)\gamma, \quad B_j^z(t_{k+1}) = \frac{t_{k+1}}{\tau}\left(\sum_{i \neq j} j_{ij}\, s_i^z(t_k) + g_j\right)$$

s5

$$\tan\theta = B_j^z(t_{k+1})/B_j^x(t_{k+1}), \quad s_j^z(t_{k+1}) = \sin\theta \qquad \left( s_j^x(t_{k+1}) = \cos\theta \right)$$

s6

$$B_j^x(t_m) = \left(1 - \frac{t_m}{\tau}\right)\gamma, \quad B_j^z(t_m) = \frac{t_1}{\tau}\left(\sum_{i \neq j} j_{ij}\, s_i^z(t_{m-1}) + g_j\right)$$

s7

$$\tan\theta = B_j^z(t_m)/B_j^x(t_m), \quad s_j^z(t_m) = \sin\theta \qquad \left( s_j^x(t_m) = \cos\theta \right)$$

s8

$$s_j^z(t_m) > 0$$

YES          NO

s9

$$s_j^{zd} = 1 \qquad s_j^{zd} = -1$$

FIG. 4

## FINANCIAL INSTRUMENT INFORMATION $\sim$125

| INSTRUMENT ID | 1 | 2 | 3 | · · · | 10000 |
|---|---|---|---|---|---|
| TARGET EVENT | STORM | EARTHQUAKE | WILDFIRE | · · · | VOLCANO ERUPTION |
| TARGET REGION | UNITED STATES | JAPAN | AUSTRALIA | · · · | UNITED STATES |
| INSURANCE PREMIUM REVENUE | 1 MILLION YEN | 2 MILLION YEN | 800 THOUSAND YEN | · · · | 3 MILLION YEN |
| · · · | · · · | · · · | · · · | · · · | · · · |

FIG. 5

EVENT SIMULATION RESULT 126

| | | INSTRUMENT ID | | | | | TOTAL LOSS AMOUNT |
|---|---|---|---|---|---|---|---|
| | 1 | 1 | 2 | 3 | · · · | 10000 | |
| SCENARIO ID | 2 | 1 MILLION YEN | 0 | 0 | · · · | 0 | 200 MILLION YEN |
| | 3 | 0 | 2 MILLION YEN | 3 MILLION YEN | · · · | 200 THOUSAND YEN | 1 BILLION YEN |
| | · · · | · · · | · · · | · · · | · · · | · · · | · · · |
| | 100000 | 2 MILLION YEN | 400 THOUSAND YEN | 400 THOUSAND YEN | · · · | 0 | 500 MILLION YEN |

FIG. 6

FIG. 7

~ 1000

USER: MR./MS. 00001

WE WOULD LIKE TO REPORT ON OPTIMAL SHARES OF
RESPECTIVE INSURANCE INSTRUMENTS INCLUDED IN PORTFOLIO

| INSTRUMENT ID | 1 | 2 | 3 | · · · | 10000 | |
|---|---|---|---|---|---|---|
| TARGET EVENT | STORM | EARTHQUAKE | WILDFIRE | · · · | VOLCANO ERUPTION | |
| TARGET REGION | UNITED STATES | JAPAN | AUSTRALIA | · · · | UNITED STATES | TOTAL AMOUNT |
| INSURANCE PREMIUM REVENUE | 1 MILLION YEN | 2 MILLION YEN | 800 THOUSAND YEN | · · · | 3 MILLION YEN | |
| OPTIMAL SHARE | **5%** | **10%** | **5%** | · · · | **2%** | |
| REVENUE (R) | 50 THOUSAND YEN | 200 THOUSAND YEN | 40 THOUSAND YEN | · · · | 60 THOUSAND YEN | 8 MILLION YEN |
| LOSS (L) | 10 THOUSAND YEN | 20 THOUSAND YEN | 80 THOUSAND YEN | | 50 THOUSAND YEN | 1.24 MILLION YEN |
| RATE OF RETURN (R/L) | | | | | | 6 . 4 5 |

O K

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001076057 A
- JP 2008047099 A
- WO 2016183357 A
- WO 2016157333 A

**Non-patent literature cited in the description**

- **E. FARHI et al.** A quantum adiabatic evolution algorithm applied to random instances of an NP-complete problem. *Science*, 2001, vol. 292, 472
- *J.Phys.A: Math. Gen.*, 1982, vol. 15, 3241